# EUROPÄISCHE PATENTANMELDUNG

(11) **EP 0 930 725 A2**
(43) Veröffentlichungstag der Anmeldung: **21.07.1999**
(21) Anmeldenummer: 99440004.2
(22) Anmeldetag: 14.01.1999
(51) Int. Cl.: H04B 3/23

(54) **Einrichtung und Verfahren zur Echounterdrückung mit adaptiven FIR-Filtern**

(30) Priorität: 16.01.1998 DE 19801390
(71) Anmelder: ALCATEL, 75008 Paris (FR)
(72) Erfinder: Mann, Armin, 70197 Stuttgart (DE); Matt, Hans Jürgen, Dr., 71686 Remseck (DE); Walker, Michael, 73666 Baltmannsweiler (DE)
(74) Vertreter: Müller, Joachim, Dipl.-Ing.

(57) **Zusammenfassung**

Eine Einrichtung (1) zur Unterdrückung von aus mehreren Teilechos bestehenden Gesamtechos in Telekommunikations(TK)- Einrichtungen, wie Endgeräten, Übertragungssystemen oder Vermittlungseinrichtungen, mit Hilfe von adaptiven FIR (= Finite Impulse Response)-Filtern, die das Gesamtecho nachbilden und von dem an die jeweilige TK-Einrichtung übertragenen, mit dem Echo belasteten Nutzsignal abziehen, ist dadurch gekennzeichnet, daß bei m zu bedienenden parallelen, voneinander unabhängigen TK-Kanälen n gleichartige FIR-Filter bzw. Teilfilter (10), die jeweils ein Gesamt- bzw. Teilecho nachbilden können, auf einem einzigen ASIC (= Application Specific Integrated Circuit) (9) implementiert sind, daß die nachzubildenden Gesamt- bzw. Teilechos in Echtzeit auf dem ASIC (9) berechnet werden können; und daß ein digitaler Signalprozessor (4) vorgesehen ist, der den ASIC (9) steuern und die Filtereinstellungen, insbesondere die Berechnung und Einstellung der zur Echonachbildung erforderlichen Koeffizienten und Zeitverzögerungen im ASIC (9) vornehmen kann. Damit wird auch bei einer großen Vielzahl von m parallelen, voneinander unabhängigen TK-Kanälen, wie sie in Vermittlungsstellen oder Netzhybriden verarbeitet werden müssen, eine effektive Echounterdrückung ohne großen Speicherplatz- und Rechenaufwand ermöglicht.

## Beschreibung

Die Erfindung betrifft eine Einrichtung und ein Verfahren zur Unterdrückung von aus mehreren Teilechos bestehenden Gesamtechos in Telekommunikations(TK)- Einrichtungen, wie Endgeräten, Übertragungssystemen oder Vermittlungseinrichtungen, mit Hilfe von adaptiven FIR (= Finite Impulse Response)-Filtern, die das Gesamtecho nachbilden und von dem an die jeweilige TK-Einrichtung übertragenen, mit dem Echo belasteten Nutzsignal abziehen.

Ein solches Verfahren und eine Einrichtung zur adaptiven Echokompensation sind bekannt aus der DE 44 30 189 A1.

Bei der Übertragung von Sprachsignalen auf Telekommunikationsleitungen können einerseits am "nahen Ende" bei dem aussendenden Benutzer akustische Echos aufgrund der direkten Schallübertragung vom Lautsprecher zum Mikrofon des Endgerätes entstehen. Insbesondere bei mehreren räumlich benachbart angeordneten Endgeräten, beispielsweise in einem Büro- oder Konferenzraum mit vielen Telefonanschlüssen, verschärft sich das Nahecho-Problem erheblich, da eine Kopplung von jedem Lautsprechersignal auf jedes Mikrofon erfolgt. Das in der EP 0 627 825 A2 vorgeschlagene Vielkanal-Echo-Unterdrückungsverfahren und die zugehörige elektronische Schaltung sollen hier Abhilfe schaffen. Neben dem nahen akustischen Echo entsteht aber auch ein ggf. aus unterschiedlich vielen Teilechos zusammengesetztes elektrisches Leitungsecho aufgrund von Reflexionen der ausgesendeten Sprachsignale an unterschiedlich entfernten Stellen im Übertragungskanal, beispielsweise bei 2-4-Drahthybriden (Gabelschaltungen) im Endgerät bzw. in Vermittlungsstellen und an Netzübergängen. Dabei werden üblicherweise sogenannte "Nahbereich-Echos", die in einem Zeitraum bis zu 128 ms zum Sprecher zurückreflektiert werden, unterschieden von Fern-Echos, die in einem Zeitrahmen bis 640 ms an den Sprecher zurückkommen und aufgrund des großen Zeitversatzes besonders störend wirken, da der Sprecher unterdessen in seiner Rede merklich fortgefahren ist, wenn sein eigenes reflektiertes Sprachsignal wieder bei ihm ankommt. Derartige verzögerte Fernechos treten beispielsweise bei interkontinentalen, über Tiefseekabel oder Satelliten übertragenen Ferngespräche auf. Die Netzbetreiber, die entsprechende Fernsprechnetze unterhalten, sind daher bestrebt, insbesondere die Fernechos mit großem Zeitversatz, aber auch die mit ggf. höherer Intensität zurückreflektierten Nahechos möglichst effektiv zu unterdrücken.

Dazu wird beispielsweise in der EP 0 792 029 A2 eine Echounterdrückungseinrichtung mit adaptivem Filter vorgeschlagen, die einen groben und einen feinen Detektor für Nahend-Sprachsignale umfaßt, welche beidseits der Echounterdrückungseinrichtung angeordnet sind und somit das ankommende Signal vor und nach der Echounterdrückung beobachten können. In Sprachpausen vom nahen Ende soll damit eine Anpassung an reflektierte Echowerte vorgenommen werden.

In der eingangs zitierten DE 44 30 189 A1 ist ein kostengünstiges Verfahren vorgeschlagen, das bei unterschiedlichen akustischen Bedingungen einsetzbar ist, und bei dem ein FIR-Filter eingesetzt wird, dessen Filterkoeffizienten nach dem NMLS-Algorithmus bestimmt werden. Zur Echounterdrückung in einem TK-Netz mit einer Vielzahl von parallelen Kanälen wird nach dieser Methode für jeden Kanal ein derartiger Echounterdrücker mit adaptivem FIR-Filter eingesetzt, der auf einem digitalen Signalprozessor in Software realisiert ist. Das adaptive FIR-Filter soll dabei das zu erwartende, möglicherweise aus mehreren Einzelechos bestehende Gesamtecho nachbilden und von dem an das TK-Endgerät übertragene, mit dem Echo behaftete Nutzsignal abziehen.

Aufgabe der vorliegenden Erfindung ist es demgegenüber, ein Verfahren und eine Einrichtung der eingangs genannten Art dahingehend weiterzubilden, daß auch bei einer großen Vielzahl von m parallelen, voneinander unabhängigen TK-Kanälen, wie sie z.B. in Vermittlungsstellen gebündelt werden müssen, eine effektive Echounterdrückung ohne großen Speicherplatz- und Rechenaufwand ermöglicht wird.

Erfindungsgemäß wird diese Aufgabe dadurch gelöst, daß bei m zu bedienenden parallelen, voneinander unabhängigen TK-Kanälen n gleichartige FIR-Filter bzw. Teilfilter, die jeweils ein Gesamt- bzw. Teilecho nachbilden können, auf einem einzigen ASIC (= Application Specific Integrated Circuit) implementiert sind, wobei m, n ∈ N und insbesondere n ≥ 2; daß die nachzubildenden Gesamt- bzw. Teilechos in Echtzeit auf dem ASIC berechnet werden können; und daß ein digitaler Signalprozessor (= DSP) vorgesehen ist, der den ASIC steuern und die Filtereinstellungen, insbesondere nach im DSP erfolgter Berechnung der zur Echonachbildung erforderlichen Koeffizienten und Zeitverzögerungen im ASIC vornehmen kann.

Durch die hohe Integrationsdichte eines ASIC kann die erfindungsgemäße Einrichtung besonders kompakt gehalten werden. Da der digitale Signalprozessor durch die Integration der FIR-Filter auf dem ASIC ganz erheblich entlastet wird, können ungleich viel mehr parallele TK-Kanäle bei gleichbleibendem Prozessoraufwand mit einer effektiven Echounterdrückung bedient werden. Damit lassen sich auch größere Verzögerungszeiten der Echos (beispielsweise bis zu 640 ms), eine Vielzahl von Einzelechos pro Gesamtecho und viele parallele Kanäle (>2000) mit minimalem Aufwand bearbeiten.

Vorteilhafterweise wird eine Anzahl von FIR-Teilfiltern kaskadiert, um ein Gesamtecho nachzubilden. Derzeit liegen die Forderungen der Betreiber von TK-Netzen bei drei bis fünf zu unterdrückenden Teilechos pro Kanal. Dies kann sich jedoch in Zukunft noch erhöhen.

Besonders bevorzugt ist eine Ausführungsform der erfindungsgemäßen Einrichtung, bei der eine variable Untermenge der FIR-Teilfilter einem zu bedienenden TK-Kanal jeweils nach Bedarf abhängig von der Anzahl der Teilechos sowie der Größe der auftretenden Verzögerungszeiten zugeordnet werden kann. Durch diese flexible Zuordnung der FIR-Filter pro bearbeitetem Kanal je nach Anzahl der Einzelechos und je nach Größe der auftretenden Verzögerungszeit zwischen Signal und Echo kann das ASIC trotz sehr hoher Kanalzahl m äußerst kompakt gestaltet werden.

Eine vorteilhafte Weiterbildung zeichnet sich dadurch aus, daß für jedes FIR-Teilfilter eine Makrozelle im ASIC vorgesehen ist, die ein Schieberegister geeigneter Länge zur Zwischenspeicherung der abgetasteten Sprachsignale, eine Demultiplexer-Einrichtung zur Einstellung der wirksamen Schieberegisterlänge sowie eine Summier-Einrichtung zur Summation der mit den entsprechenden Koeffizienten gewichteten Abtastwerten umfaßt. Die Makrozellen können untereinander einen exakt gleichen Aufbau aufweisen, was die Herstellung eines ASIC mit vielen gleichartigen FIR-Teilfiltern vereinfacht und damit verbilligt.

Insbesondere ist eine Kaskadierung mehrerer Makrozellen leicht möglich, was eine beliebige, flexible Zusammenschaltung, beispielsweise zur Nachbildung eines Gesamtechos, und damit einen besonders hohen Ausnutzungsgrad der Makrozellen ermöglicht.

Bei einer bevorzugten Weiterbildung ist vorgesehen, daß die Makrozelle einen vom digitalen Signalprozessor ansteuerbaren Koeffizientenspeicher umfaßt, der von einem modulo-N-Zähler adressiert ausgelesen werden kann, sowie ein Multiplizierglied, welchem mit einer Arbeitsfrequenz f_{A} = N·fₛ die entsprechenden Koeffizienten aus dem Koeffizientenspeicher und die entsprechenden Abtastwerte aus dem Schieberegister zur Multiplikation zugeführt werden, wobei die Abtastwerte mit einer Abtastfrequenz fₛ im Schieberegister gespeichert wurden, und daß ein Addierer vorgesehen ist, in dem die vom Multiplizierglied ausgegebenen Produktwerte zu der jeweils in einem ersten Zwischenspeicher über eine Rückkopplungsschleife abgespeicherten Summe der vorhergehenden Produktwerte addiert und schließlich das so nachgebildete Teilechosignal in einem zweiten Zwischenspeicher abgelegt und von einem an die TK-Einrichtung übertragenem Nutzsignal abgezogen werden kann. Bei diesem Aufbau ist lediglich ein einziger Multiplizierer notwendig, der für die Verarbeitung von N Koeffizienten eine entsprechende Anzahl von Multiplizierern in herkömmlichen FIR-Teilfiltern ersetzt. Die gegenüber der Abtastfrequenz fₛ um den Faktor N erhöhte Arbeitsfrequenz f_{A} ist bei heute standardmäßig erhältlichen elektronischen Bauteilen unproblematisch, wenn sich N in der Größenordnung 50-100 bewegt.

Besonders effektiv ist auch eine Ausführungsform der erfindungsgemäßen Einrichtung, die sich dadurch auszeichnet, daß mehrere Koeffizientenspeicher vorgesehen sind, die jeweils mittels eines Demultiplexers ausgelesen werden können, wobei jedem zu bedienenden TK-Kanal ein entsprechender Koeffizientenspeicher zugeordnet werden kann, und daß die Echounterdrückung auf sämtlichen TK-Kanälen über ein einziges, im Multiplexbetrieb umschaltbares FIR-Gesamtfilter bestehend aus mehreren FIR-Teilfiltern vorgenommen werden kann.

Bevorzugt ist auch eine weitere Ausführungsform, bei der eine Speichereinheit, vorzugsweise ein RAM (= Random Access Memory), vorgesehen ist, auf der aktuell abgetastete, von der TK-Einrichtung ausgesendete Sprachsignale sowie die zu den nachgebildeten Teilechos gehörenden Koeffizienten abgespeichert werden können, und wobei eine Steuereinheit, vorzugsweise auf dem ASIC integriert, vorgesehen ist, die den Ablauf der Echounterdrückung mittels Adressenberechnung von Speicherdaten in der Speichereinheit und Ansteuerung von Ein- und Auslesevorgängen zwischen der Speichereinheit, dem DSP und den FIR-Teilfiltern auf dem ASIC verwaltet. Auf diese Weise können die Koeffizientenspeicher und Abtastwertspeicher aus dem ASIC ausgelagert und auf ein äußerst preisgünstig und mit hoher Speicherdichte erhältliches RAM gepackt werden. Damit entfällt auch das Schieberegister in den oben beschriebenen Ausführungsformen. Die Steuereinheit verwaltet im wesentlichen den Ablauf der Datenströme, so daß extrem wenig Hardware zur Realisierung der Echounterdrückungseinrichtung erforderlich ist und der steuernde digitale Signalprozessor weitestgehend entlastet wird, da er im wesentlichen nur noch die Koeffizienten berechnung, vorzugsweise für mehrere unabhängige TK-Kanäle, vornehmen muß.

Ganz besonders bevorzugt kann bei einer Weiterbildung dieser Ausführungsform die Einrichtung im Zeitmultiplexverfahren m unabhängige TK-Kanäle bedienen. Dabei ersetzt die Adressenrechnung in der Steuereinheit die Multiplexeinheiten aus den weiter oben beschriebenen Ausführungsformen.

Bei einer weiteren bevorzugten Ausführungsform der erfindungsgemäßen Einrichtung ist zusätzlich eine Einrichtung zur Erkennung von Nicht-Sprachsignalen auf einem TK-Kanal, insbesondere zur Detektion von Modem- oder Faxsignalen vorgesehen. Dadurch kann die Echounterdrückungsfunktion automatisch bei Vorliegen von Nicht-Sprachsignalen ausgeschaltet werden, was die Verbindungssicherheit für Fax- oder Modem-Verbindungen erhöht.

Bei einer Weiterbildung dieser Ausführungsform ist auf der Einrichtung zur Erkennung von Nicht-Sprachsignalen eine diskrete Fourier-Transformation (= DFT), insbesondere ein Goertzel-Algorithmus implementiert. Damit wird besonders wenig Speicherplatz und Rechenkapazität für diese Zusatzfunktion benötigt.

Zusätzlich kann bei weiteren Ausführungsformen auch eine Compander-Schaltung zur Maskierung der auftretenden Leitungsechos vorgesehen sein. Die Echounterdrückung und damit der Komfort beim Endteilnehmer wird dadurch noch effektiver.

Die Compander-Schaltung kann ebenfalls auf einem ASIC realisiert sein, vorzugsweise auf demselben ASIC wie die FIR-Filter. Die Hardware-Einheiten sind dann besonders kompakt und preiswert in der Herstellung.

In den Rahmen der Erfindung fällt auch ein Verfahren zum Betrieb einer erfindungsgemäßen Echo-Unterdrückungseinrichtung, welches sich dadurch auszeichnet, daß ein Dirac-lmpuls auf den entsprechenden TK-Kanal gesendet, die Echoantwort darauf detektiert und zur Nachbildung des Gesamtechos geeignete Koeffizienten berechnet und für das entsprechende FIR-Filter abgespeichert werden.

Anstelle des Dirac-lmpulses werden bei anderen Verfahrensvarianten eine definierte analoge Rauschsignalsequenz auf den entsprechenden TK-Kanal gesendet, die Echoantwort darauf detektiert und zur Nachbildung des Gesamtechos geeignete Koeffizienten berechnet und abgespeichert. Die Aussendedauer der Rauschsignalsequenz beträgt in der Regel weniger als eine Sekunde.

Besonders bevorzugt ist eine Weiterbildung dieser Verfahrensvariante, bei der die analoge Rauschsignalsequenz ein vorzugsweise auf die Bandbreite des zu bedienenden TK-Kanals begrenztes Gaußsches Rauschsignal umfaßt.

Eine weitere alternative Verfahrensvariante zeichnet sich dadurch aus, daß eine synthetische, vorzugsweise ternäre Pseudorauschsequenz auf den entsprechenden TK-Kanal gesendet, die Echoantwort darauf detektiert und zur Nachbildung des Gesamtechos geeignete Koeffizienten berechnet und abgespeichert werden. Die Pseudorauschsequenz wird in der Regel so ausgewählt, daß nur der Hauptwert der Sequenz einen Korrelationswert q aufweist, während die Nebenwerte den Korrelationswert 0 haben.

Besonders bevorzugt werden die Koeffizienten zur Echonachbildung durch Korrelation der ausgesendeten mit den empfangenen Echosignalen gewonnen.

Bevorzugt ist auch eine Weiterbildung des erfindungsgemäßen Verfahrens, bei der zur Koeffizientenberechnung aus den empfangenen Echosignalen in Kenntnis der ausgesendeten Signale ein NLMS (= Normalized Least Mean Square)-Algorithmus angewandt wird. Dadurch wird die erforderliche Rechenzeit und Rechenleistung zur Erzielung eines befriedigenden Ergebnisses besonders klein gehalten. In diesem Fall wird die Länge der Rauschsequenz vorteilhaft auf die Länge des FIR-Filters abgestimmt.

Bei einer Verfahrensvariante kann im ASIC das aus sämtlichen zu berücksichtigenden Teilechos zusammengesetzte Gesamtecho nachgebildet und von dem an die TK-Einrichtung übertragenen, mit dem Echo behafteten Nutzsignal insgesamt abgezogen werden. Damit wird lediglich an einer Stelle auf das ankommende Signal auf dem zu bedienenden TK-Kanal eingewirkt.

Alternativ dazu können im ASIC sämtliche zu berücksichtigenden Teilechos nachgebildet und von dem an die TK-Einrichtung übertragenen Nutzsignal einzeln abgezogen werden. Dadurch wird die Ausgestaltung der Hardware und Rechner-Einheiten bei der erfindungsgemäßen Einrichtung flexibel gehalten.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: in der oberen Hälfte den zeitlichen Verlauf einer typischen Nahbereichs-Echosequenz mit zwei Teilechos und in der unteren Hälfte eine Fern-Echosequenz mit drei Teilechos;
- Fig. 2: eine schematische Darstellung einer einfachen Ausführungsform der erfindungsgemäßen Einrichtung mit lediglich einem zu bedienenden TK-Kanal;
- Fig. 3a: eine Makrozelle für ein Teil-FIR-Filter;
- Fig. 3b: eine konkrete Weiterbildung der Makrozelle nach Fig. 3a mit im Multiplexverfahren auslesbarem Koeffizientenspeicher für einen TK-Kanal;
- Fig. 4: eine schematische Darstellung von kaskadierten Makrozellen nach Fig. 3a bzw. 3b, wobei im oberen Teil der Figur der zeitliche Verlauf von teilweise recht eng benachbarten Teilechos dargestellt ist;
- Fig. 5a: eine weitere Ausführungsform mit kaskadierten Makrozellen mit im Multiplexbetrieb auslesbaren Koeffizientenspeichern für die Zeitmultiplexverarbeitung von m TK-Kanälen;
- Fig. 5b: eine Ausführungsform mit kaskadierten Makrozellen und einer gemultiplexten Schieberegisteranordnung für die eingehenden Abtastwerte unterschiedlicher, voneinander unabhängiger TK-Kanäle; und
- Fig. 6: eine Ausführungsform, bei der die Koeffizientenspeicher und Abtastwertspeicher auf eine RAM-Einheit ausgelagert sind und der Ablauf der Teilechonachbildungen für die unterschiedlichen TK-Kanäle im wesentlichen von einer Steuereinheit auf dem ASIC verwaltet wird.

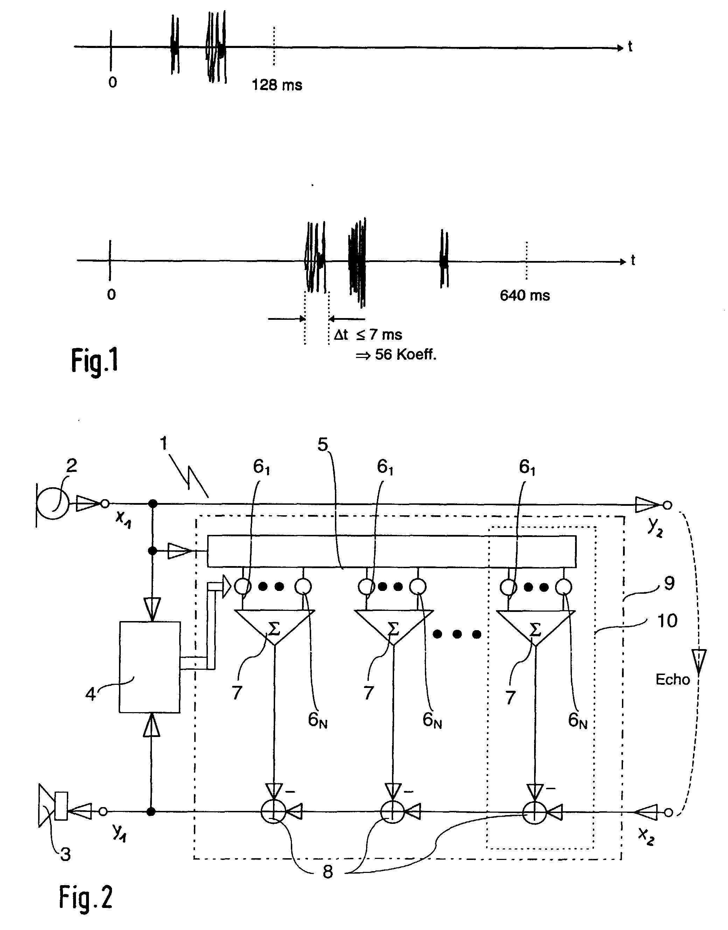

Im oberen Teil von Fig. 1 ist der zeitliche Verlauf einer Folge von Nahbereich-Teilechos dargestellt, die definitionsgemäß eine Verzögerungszeit von bis zu 128 ms gegenüber dem Zeitpunkt des Aussendens des Signals vom entsprechenden TK-Teilnehmer aufweisen. Derartige Leitungsechos kommen beispielsweise an Vermittlungsstellen, Netzhybriden und anderen Arten von Knotenstellen im Netz durch Reflexion zustande, wirken aber dann nicht störend, wenn noch keine merkliche Verzögerungszeit (Größenordnung 10 ms) seit dem Aussenden des Ursprungssignals vergangen ist, weil ein Sprecher an einem TK-Endgerät einen gewissen Echoeffekt auch durch akustische Echos im Raum um ihn herum bzw. seinen eigenen Körperschall im Kopf aufnimmt und quasi automatisch "kompensiert", da er daran gewöhnt ist.

Sehr problematisch werden die Leitungsechos allerdings immer dann, wenn größere Verzögerungszeiten als 30 ms auftreten, was im unteren Teil von Fig. 1 dargestellt ist. Derartige Fern-Echos mit Zeitverzögerungen in der Größenordnung bis 640 ms können beispielsweise bei kontinentalen Ferngesprächen oder bei Interkontinentalverbindungen auftreten. Allein eine Satellitenübertragung eines Signals von einem Kontinent zum anderen beträgt in der Regel ca. 250 ms. Zum Zeitpunkt des Empfangs eines solchen fernen Echos durch den ursprünglichen Absender ist der letztere in seiner Rede schon merklich fortgeschritten, so daß der Echoeffekt besonders störend wirkt. Ähnlich starke Zeitverzögerungen können auftreten, wenn ein Sprachsignal eine starke Kompression und Dekompression durchläuft, oder wenn es parallel zu einer komprimierten Bildübertragung verzögert werden muß, um Lippensynchronität beizubehalten.

Um derartige Echos zu unterdrücken, werden Einrichtungen verwandt, die adaptive FIR-(= Finite Impulse Response)-Filter zur Nachbildung der Echos und dem anschließenden Abzug vom echobehafteten Nutzsignal aufweisen. Für die Bedienung von einem TK-Kanal ist in Fig. 2 eine solche Einrichtung 1 schematisch dargestellt. Vom Mikrofon 2 eines TK-Endgerätes wird ein Nah-End-Sendesignal x₁ abgesendet und kommt beim fernen Teilnehmer als Sendesignal y₂ an. Auf dem Rückkanal zum Lautsprecher 3 des TK-Endgerätes wird neben dem vom fernen Teilnehmer übertragenen Signal auch ein aus mehreren.Teilechos bestehendes Echosignal in das empfangene Signal x₂ eingekoppelt, welches durch die Echounterdrückungseinheit nachbehandelt und als ankommendes Nutzsignal y₁ in den Lautsprecher 3 gegeben wird.

Um ein realistisches Echosignal nachbilden zu können, kann ein Testsignal auf die Leitung an der Stelle y₂ ausgesendet werden, dessen Wirkung die Konvergenz eines NLMS-Algorithmus zur Berechnung der Koeffizienten beschleunigt. In einem Computer, insbesondere einem digitalen Signalprozessor (= DSP) 4 werden aus der Echoantwort mit Hilfe des NLMS-Algorithmus N zur Nachbildung des Echos geeignete Koeffizienten ausgerechnet, die der eigentlichen Einrichtung zur Echosubtraktion, welche erfindungsgemäß auf einem ASIC (= Application Specific Integrated Circuit) 9 implementiert ist, zugeführt werden. Im Zeitmultiplex werden Abtastwerte des eigentlichen Sprachsignals vom TK-Kanal kommend in eine Delay-Line 5 gegeben, die meist als Schieberegister ausgeführt ist. Ferner werden ausgewählte Abtastwerte vom Schieberegister auf das ASIC 9 gegeben. In N Multipliziergliedern 6₁ bis 6_{N} wird dann das Produkt der entsprechenden Abtastwerte aus der Delay-Line 5 mit den aus dem DSP 4 zugelieferten Koeffizienten gebildet, für jedes Teilecho die entsprechende Summe aus diesen Produkten in den Summiergliedern 7 berechnet und mit Hilfe von negativen Addierern 8 von dem an der Stelle x₂ hereinkommenden, zunächst mit dem gesamten Leitungsecho belasteten Nutzsignal abgezogen, so daß an der Stelle y₁ ein im wesentlichen von Echos befreites Signal an den TK-Kanal abgegeben wird.

Je nach Anforderungen an die Qualität der Echounterdrückung muß eine mehr oder weniger große Zahl n von FIR-Teilfiltern 10 innerhalb des ASIC 9 vorgesehen werden, die jeweils ein Teilecho mit Hilfe von entsprechend vielen Koeffizienten nachbilden und vom Nutzsignal abziehen. Wenn die zeitliche Breite eines Teilechos, wie im unteren Teil von Fig. 1 dargestellt, mit Δt ≤ 7 ms angenommen wird, ist bei einer Verarbeitungsgeschwindigkeit von 125 ms (entsprechend 8 kHz) pro Teilecho jeweils eine Anzahl von N = 56 Koeffizienten zur genauen Nachbildung des Teilechos erforderlich. Durch Kaskadieren einer entsprechenden Anzahl von gleichartigen FIR-Teilfiltern 10 auf dem ASIC 9 können dann entsprechend viele Teilechos berücksichtigt werden. Derzeit liegen die Forderungen von Netzbetreibern bei einer Unterdrückungsleistung von drei bis fünf Teilechos pro Gesamtecho.

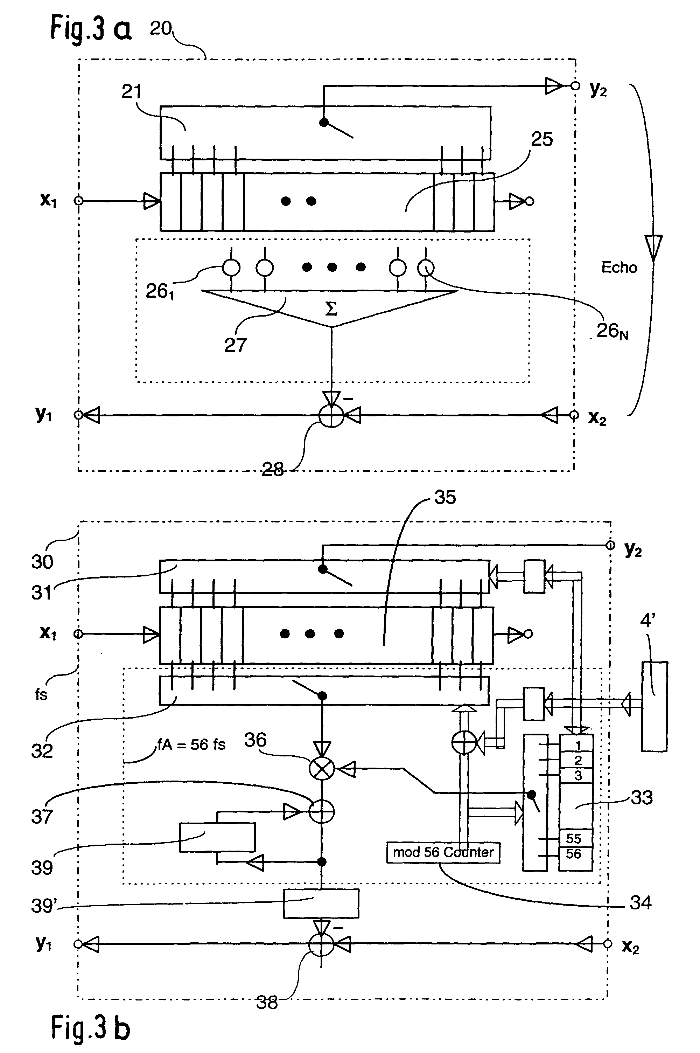

Die verschiedenen FIR-Teilfilter 10 können jeweils als Makrozelle auf dem ASIC vorgesehen sein. Eine solche Makrozelle 20 ist in Fig.3a schematisch dargestellt. Die Makrozelle 20 enthält ein mit einer Demultiplexer-Einrichtung 21 in seiner wirksamen Länge einstellbares Schieberegister 25, in das über x₁ die Abtastwerte der aktuellen Sprachsignale eingegeben werden. Eine Summiereinrichtung 27 summiert die mit den entsprechenden Koeffizienten gewichteten Abtastwerte aus den N Multipliziereinrichtungen 26₁ bis 26_{N} und ein negativer Addierer 28 subtrahiert die so gewonnenen nachgebildeten Teilechos vom echobehafteten Nutzsignal auf der Leitung x₂-y₁.

In Fig. 3b ist eine geschickte Weiterentwicklung der Makrozelle 20 nach Fig. 3a dargestellt: Die Makrozelle 30 umfaßt einen vom digitalen Signalprozessor 4' ansteuerbaren Koeffizientenspeicher 33 für N Koeffizienten, der von einem modulo-N-Zähler (im gezeigten Beispiel ein modulo-56-Zähler) 34 adressiert ausgelesen werden kann. Dadurch ist nur ein einziges Multiplizierglied 36 erforderlich, welchem mit einer Arbeitsfrequenz f_{A} = N·fₛ die entsprechenden Koeffizienten aus dem Koeffizientenspeicher 33 und die entsprechenden Abtastwerte aus dem Schieberegister 35 zur Multiplikation zugeführt werden, wobei die Abtastwerte über eine Abtastfrequenz f_{S} im Schieberegister 35 gespeichert werden. Das Schieberegister 35 wird wiederum mit einer ersten Demultiplexer-Einrichtung 31 in seiner wirksamen Länge eingestellt und mit einer zweiten Demultiplexer-Einrichtung 32 im Takt des modulo-N-Zählers 34 ausgelesen.

Die von dem Multiplizierglied 36 ausgegebenen Produktwerte aus Abtastwerten und entsprechenden Koeffizienten werden einem Addierer 37 zugeführt, der sie zu der jeweils in einem ersten Zwischenspeicher 39 über eine Rückkopplungsschleife abgespeicherten Summe der vorhergehenden Produktwerte addiert und schließlich das so nachgebildete Teilechosignal in einem zweiten Zwischenspeicher 39' ablegt. Dieses Teilechosignal wird dann mittels eines Subtrahiergliedes (bzw. eines negativen Addierers) 38 von dem an die TK-Einrichtung übertragenen echobehafteten Nutzsignal auf der Strecke x₂-y₁ abgezogen.

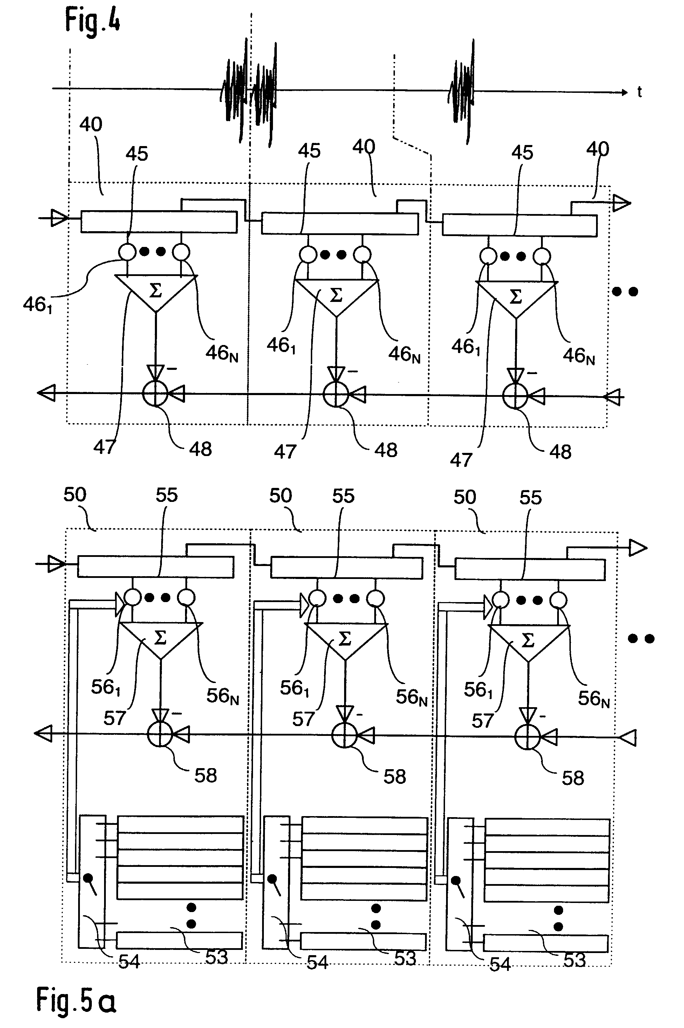

Wie in Fig. 4 schematisch dargestellt ist, können mehrere, im wesentlichen gleich aufgebaute Makrozellen 40 mit Schieberegistern 45, Multipliziergliedern 46₁ bis 46_{N}, Summiergliedern 47 und Subtrahiergliedern 48 im ASIC kaskadiert angeordnet sein. Durch den gleichen Aufbau der Makrozellen 40 lassen sich die Herstellungskosten des ASIC erheblich senken. Außerdem kann durch eine flexible Zusammenschaltung der Makrozellen 40 die Prozeßkapazität des ASIC besser ausgenutzt werden. So kann zum Beispiel eine variable Untermenge der von Makrozellen 40 gebildeten FIR-Teilfilter einem zu bedienenden TK-Kanal jeweils nach Bedarf abhängig von der Anzahl der Teilechos sowie der Größe der auftretenden Verzögerungszeiten zugeordnet werden. Ein Kanal mit wenigen Teilechos und/oder geringen Verzögerungszeiten "verbraucht" somit eine geringere Anzahl von FIR-Teilfiltern als ein Kanal mit vielen Teilechos.

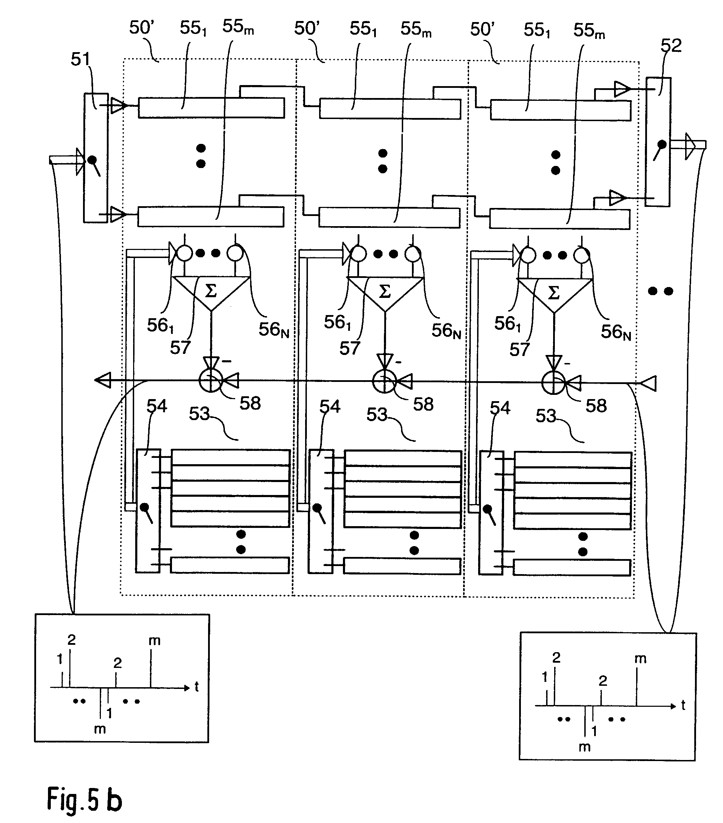

In Fig. 5a ist eine weitere Ausführungsform der erfindungsgemäßen Einrichtung mit kaskadierten, im wesentlichen gleich aufgebauten Makrozellen 50 dargestellt, die wiederum jeweils ein Schieberegister 55, N Multiplizierglieder 56₁ bis 56_{N}, ein Summierglied 57 und ein Subtrahierglied 58 aufweisen. Diese Anordnung ist für die Zeitmultiplexbearbeitung von m TK-Kanälen vorgesehen. Dazu hat das Schieberegister 55 beispielsweise eine um den Faktor m größere Länge. Die Auswahl der passenden Abtastwerte muß jetzt die zeitliche Verschachtelung der Abtastwerte der m TK-Kanäle im Schieberegister 55 berücksichtigen.

Zudem enthalten die Makrozellen 50 aber auch jeweils einen N Koeffizienten umfassenden Koeffizientenspeicher 53, der mit einem Demultiplexer 54 ausgelesen werden kann. Die Koeffizientenwerte werden den entsprechenden Mulitpliziergliedern 56₁ bis 56_{N} zugeführt und dort mit den jeweiligen Abtastwerten aus dem Schieberegister 55 multipliziert und im Addierer 57 zu einem entsprechenden, im Subtraktionsglied 58 vom Nutzsignal abzuziehenden nachgebildeten Echosignal zusammengesetzt.

Fig. 5b zeigt eine Variante der erfindungsgemäßen Einrichtung mit kaskadierten Makrozellen 50', die sich von den Makrozellen 50 in Fig. 5a dadurch unterscheiden, daß sie statt eines einzigen Schieberegisters 55 einer der Anzahl m von zu bedienenden, parallelen, voneinander unabhängigen TK-Kanälen entsprechende Anzahl von Schieberegistern 55₁ bis 55ₘ aufweisen. Diese werden über eine Eingangs-Multiplexeinrichtung 51 mit entsprechenden Abtastwerten aus dem abgehenden Nah-End-Signal gespeist, welche mittels einer Ausgangs-Demultiplexereinrichtung 52 wieder zusammengefaßt werden können. Der zeitliche Verlauf der m Abtastwerte entsprechend den m TK-Kanälen ist schematisch in den beiden am linken und rechten unteren Rand von Fig. 5b gezeigten Kästchen dargestellt. Jedem der m zu bedienenden TK-Kanäle kann damit ein entsprechender Koeffizientenspeicher 53 zugeordnet und die Echounterdrückung auf sämtlichen m TK-Kanälen über ein einziges, im Multiplexerbetrieb umschaltbares Gesamtfilter bestehend aus mehreren FIR-Teilfiltern vorgenommen werden.

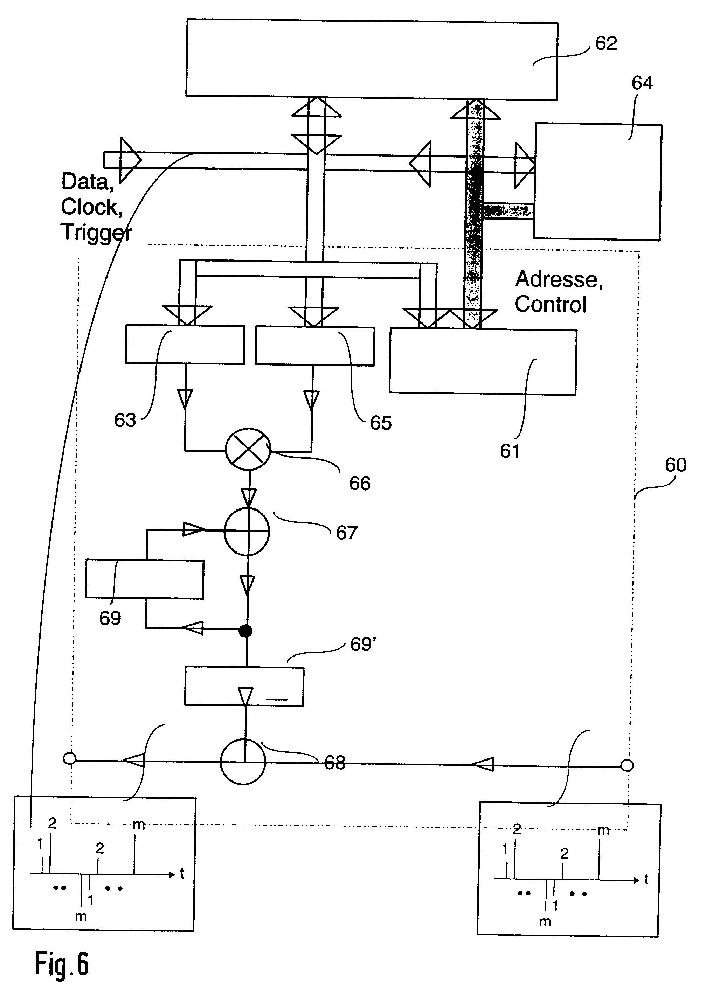

Fig. 6 schließlich zeigt eine weitere, besonders kompakte Ausführungsform der erfindungsgemäßen Einrichtung, bei der auf dem ASIC 60 eine Steuereinheit 61 integriert ist, die den Ablauf des Echounterdrückungsprozesses mittels Adressenberechnung von Speicherdaten in einer auf ein RAM ausgelagerten Speichereinheit 62 und durch Ansteuerung von Ein- und Auslesevorgängen zwischen der Speichereinheit 62, dem digitalen Signalprozessor 64 und den auf dem ASIC 60 integrierten Filterelementen verwaltet. Die FIR-Teilfilter umfassen bei dieser Ausführungsform ein einziges Multiplizierglied 66, welchem gesteuert von der Steuereinheit 61 im Zeitmultiplexverfahren über einen ersten Pufferspeicher 63 die Koeffizienten und über einen weiteren Pufferspeicher 65 die entsprechenden Abtastwerte aus der Speichereinheit zur Produktbildung zugeführt werden. Die mit den Koeffizienten gewichteten Abtastwerte werden anschließend in einem Addierer 67 über eine Rückkopplungsschleife mit der in einem ersten Zwischenspeicher 69 zwischengespeicherten Summe der vorhergehenden Produktwerte addiert und schließlich das so nachgebildete Teilecho in einem zweiten Zwischenspeicher 69' abgelegt und anschließend mittels eines Subtrahiergliedes 68 von dem jeweils anliegenden empfangenen echobelasteten Nutzsignal abgezogen. Der zeitliche Verlauf der Signalabtastwerte aus den m unabhängigen TK-Kanälen ist wiederum schematisch in zwei Kästchen links und rechts am unteren Bildrand dargestellt.

Die in Fig. 6 gezeigte Ausführungsform benötigt extrem wenig Hardware. Der digitale Signalprozessor 64 wird weitestgehend entlastet und im wesentlichen nur noch zur Berechnung der Koeffizienten eingesetzt, während sämtliche Steuervorgänge durch die Steuereinheit 61 auf dem ASIC 60 ausgeführt werden. Das ASIC 60 wiederum ist von aufwendigen Speicherfunktionen entlastet, indem die Koeffizienten- und Abtastwertspeicherung auf den externen RAM-Speicher 62 verlagert ist, der als elektronisches Standardbauteil besonders preisgünstig und mit hoher Speicherkapazität erhältlich ist und zudem die Funktion der Schieberegister in den obengenannten Ausführungsformen ersetzt. Die Funktion der Multiplexer zum Auslesen der Koeffizientenspeicher, wie sie bei den Ausführungsbeispielen der Figuren 3b, 5a und 5b vorgesehen sind, werden durch eine einfache Addressenberechnung und entsprechende Ansteuerung von Ein- und Auslesevorgängen durch die Steuereinheit 61 ersetzt. Bei in der Zeichnung nicht dargestellten Ausführungsformen der erfindungsgemäßen Einrichtung zur Echounterdrückung kann zusätzlich auch eine Einrichtung zur Erkennung von Nicht-Sprachsignalen auf einem der zu bedienenden TK-Kanäle, insbesondere zur Detektion von Modem- oder Faxsignalen vorgesehen sein, die eine automatische Abschaltung der Echounterdrückungsfunktion ermöglicht und damit die Stabilität der entsprechenden Modem-Verbindung erhöht.

Weiterhin kann zusätzlich eine Compander-Schaltung zur kombinierten Unterdrückung und Maskierung der auftretenden Leitungsechos vorgesehen sein, die vorzugsweise auf demselben ASIC realisiert sein wird, wie die FIR-Filter. Dadurch kann die Echounterdrückungsfunktion noch weiter verbessert werden.

Die oben erwähnten Testsignale zur Gewinnung der für die Echonachbildung geeigneten Koeffizienten auf dem entsprechenden TK-Kanal können Dirac-lmpulse, analoge, vorzugsweise auf die Bandbreite des zu bedienenden TK-Kanals begrenzte Gaußsche Rauschsignale oder synthetische, vorzugsweise ternäre Pseudorauschsequenzen umfassen. Die Koeffizienten zur Echonachbildung werden vorzugsweise durch Korrelation der vorher ausgesendeten mit den empfangenen Echosignalen und direkt mit Hilfe des NLMS (= Normalized Least Mean Square) - Algorithmus gewonnen.

## Patentansprüche

1. Einrichtung zur Unterdrückung von aus mehreren Teilechos bestehenden Gesamtechos in Telekommunikations(TK)- Einrichtungen, wie Endgeräten, Übertragungssystemen oder Vermittlungseinrichtungen, mit Hilfe von adaptiven FIR (= Finite Impulse Response)-Filtern, die das Gesamtecho nachbilden und von dem an die jeweilige TK-Einrichtung übertragenen, mit dem Echo belasteten Nutzsignal abziehen,
**dadurch gekennzeichnet,**
daß bei m zu bedienenden parallelen, voneinander unabhängigen TK-Kanälen n gleichartige FIR-Filter bzw. Teilfilter (10), die jeweils ein Gesamt- bzw. Teilecho nachbilden können, auf einem einzigen ASIC (= Application Specific Integrated Circuit) (9; 60) implementiert sind;
daß die nachzubildenden Gesamt- bzw. Teilechos in Echtzeit auf dem ASIC (9; 60) berechnet werden können;
und daß ein digitaler Signalprozessor (4; 4'; 64) vorgesehen ist, der den ASIC (9; 60) steuern und die Filtereinstellungen, insbesondere nach im digitalen Signalprozessor (4; 4'; 64) erfolgter Berechnung der zur Echonachbildung erforderlichen Koeffizienten im ASIC (9; 60) vornehmen kann.

2. Einrichtung nach Anspruch 1, dadurch gekennzeichnet, daß eine Anzahl von FIR-Teilfiltern (10) kaskadiert ist, um ein Gesamtecho nachzubilden.

3. Einrichtung nach Anspruch 1 oder 2, dadurch gekennzeichnet, daß eine variable Untermenge der FIR-Teilfilter (10) einem zu bedienenden TK-Kanal jeweils nach Bedarf abhängig von der Anzahl der Teilechos sowie der Größe der auftretenden Verzögerungszeiten zugeordnet werden kann.

4. Einrichtung nach Anspruch 2 oder 3, dadurch gekennzeichnet, daß für jedes FIR-Teilfilter (10) eine Makrozelle (20; 30; 40; 50; 50') im ASIC vorgesehen ist, die ein Schieberegister (25; 35; 45; 55; 55₁ bis 55ₘ) geeigneter Länge zur Zwischenspeicherung der abgetasteten Sprachsignale, eine Demultiplexer-Einrichtung (21; 31) zur Einstellung der wirksamen Schieberegisterlänge sowie eine Summier-Einrichtung (27; 37; 47; 57) zur Summation der mit den entsprechenden Koeffizienten gewichteten Abtastwerten umfaßt.

5. Einrichtung nach Anspruch 4, dadurch gekennzeichnet, daß die Makrozelle (30) einen vom digitalen Signalprozessor (4') ansteuerbaren Koeffizientenspeicher (33) umfaßt, der von einem modulo-N-Zähler (34) adressiert ausgelesen werden kann, sowie ein Multiplizierglied (36), welchem mit einer Arbeitsfrequenz f_{A} = N·fₛ die entsprechenden Koeffizienten aus dem Koeffizientenspeicher (33) und die entprechenden Abtastwerte aus dem Schieberegister (35) zur Multiplikation zugeführt werden, wobei die Abtastwerte mit einer Abtastfrequenz fₛ im Schieberegister (35) gespeichert wurden, und daß ein Addierer (37) vorgesehen ist, in dem die vom Multiplizierglied (36) ausgegebenen Produktwerte zu der jeweils in einem ersten Zwischenspeicher (39) über eine Rückkopplungsschleife abgespeicherten Summe der vorhergehenden Produktwerte addiert und schließlich das so nachgebildete Teilechosignal in einem zweiten Zwischenspeicher (39') abgelegt und von einem an die TK-Einrichtung übertragenen, echobehafteten Nutzsignal abgezogen werden kann.

6. Einrichtung nach Anspruch 4 oder 5, dadurch gekennzeichnet, daß mehrere, vorzugsweise gleich aufgebaute Makrozellen (20; 30; 40; 50; 50') im ASIC (9) kaskadiert angeordnet sind.

7. Einrichtung nach einem der vorhergehenden Ansprüche, dadurch gekennzeichnet, daß mehrere Koeffizientenspeicher (53) vorgesehen sind, die jeweils mittels eines Demultiplexers (54) ausgelesen werden können, wobei jedem zu bedienenden TK-Kanal ein entsprechender Koeffizientenspeicher (53) zugeordnet werden kann, und daß die Echounterdrückung auf sämtlichen TK-Kanälen über ein einziges, im Multiplexbetrieb umschaltbares FIR-Gesamtfilter bestehend aus mehreren FIR-Teilfiltern vorgenommen werden kann.

8. Einrichtung nach einem der vorhergehenden Ansprüche, dadurch gekennzeichnet, daß eine Speichereinheit (62), vorzugsweise ein RAM (= Random Access Memory), vorgesehen ist, auf der aktuell abgetastete, von der TK-Einrichtung ausgesendete Sprachsignale sowie die zu den nachgebildeten Teilechos gehörenden Koeffizienten abgespeichert werden können, und daß eine Steuereinheit (61), vorzugsweise auf dem ASIC (60) integriert, vorgesehen ist, die den Ablauf der Echounterdrückung mittels Adressenberechnung von Speicherdaten in der Speichereinheit (62) und Ansteuerung von Ein- und Auslesevorgängen zwischen der Speichereinheit (62), dem digitalen Signalprozessor (64) und den FIR-Teilfiltern auf dem ASIC (60) verwaltet.

9. Einrichtung nach Anspruch 8, dadurch gekennzeichnet, daß die Einrichtung (1) im Zeitmultiplexverfahren m unabhängige TK-Kanäle bedienen kann.

10. Einrichtung nach einem der vorhergehenden Ansprüche, dadurch gekennzeichnet, daß zusätzlich eine Einrichtung zur Erkennung von Nicht-Sprachsignalen auf einem TK-Kanal, insbesondere zur Detektion von Modem- oder Faxsignalen vorgesehen ist.

11. Einrichtung nach Anspruch 10, dadurch gekennzeichnet, daß auf der Einrichtung zur Erkennung von Nicht-Sprachsignalen eine diskrete Fourier-Transformation (= DFT), insbesondere ein Goertzel-Algorithmus implementiert ist.

12. Einrichtung nach einem der vorhergehenden Ansprüche, dadurch gekennzeichnet, daß zusätzlich eine Compander-Schaltung zur Maskierung der auftretenden Leitungsechos vorgesehen ist.

13. Einrichtung nach Anspruch 12, dadurch gekennzeichnet, daß die Compander-Schaltung auf einem ASIC realisiert ist, vorzugsweise auf demselben ASIC (9; 60) wie die FIR-Filter.

14. Verfahren zum Betrieb einer Einrichtung nach einem der Ansprüche 1 bis 13, dadurch gekennzeichnet, daß ein Dirac-lmpuls auf den entsprechenden TK-Kanal gesendet, die Echoantwort darauf detektiert und zur Nachbildung des Gesamtechos geeignete Koeffizienten berechnet und für das entsprechende FIR-Filter abgespeichert werden.

15. Verfahren zum Betrieb einer Einrichtung nach einem der Ansprüche 1 bis 13, dadurch gekennzeichnet, daß eine definierte analoge Rauschsignalsequenz auf den entsprechenden TK-Kanal gesendet, die Echoantwort darauf detektiert und zur Nachbildung des Gesamtechos geeignete Koeffizienten berechnet und abgespeichert werden.

16. Verfahren nach Anspruch 15, dadurch gekennzeichnet, daß die analoge Rauschsignalsequenz ein vorzugsweise auf die Bandbreite des zu bedienenden TK-Kanals begrenztes Gaußsches Rauschsignal umfaßt.

17. Verfahren zum Betrieb einer Einrichtung nach einem der Ansprüche 1 bis 13, dadurch gekennzeichnet, daß eine synthetische, vorzugsweise ternäre Pseudorauschsequenz auf den entsprechenden TK-Kanal gesendet, die Echoantwort darauf detektiert und zur Nachbildung des Gesamtechos geeignete Koeffizienten berechnet und abgespeichert werden.

18. Verfahren nach einem der Ansprüche 14 bis 17, dadurch gekennzeichnet, daß die Koeffizienten zur Echonachbildung durch Korrelation der ausgesendeten mit den empfangenen Echosignalen gewonnen werden.

19. Verfahren nach einem der Ansprüche 14 bis 18, dadurch gekennzeichnet, daß zur Koeffizientenberechnung aus den empfangenen Echosignalen in Kenntnis der ausgesendeten Signale ein NLMS (= Normalized Least Mean Square)-Algorithmus zur Berechnung der Filterkoeffizienten angewandt wird.

20. Verfahren nach einem der Ansprüche 14 bis 19, dadurch gekennzeichnet, daß im ASIC (60) das aus sämtlichen zu berücksichtigenden Teilechos zusammengesetzte Gesamtecho nachgebildet und von dem an die TK-Einrichtung übertragenen Nutzsignal insgesamt abgezogen wird.

21. Verfahren nach einem der Ansprüche 14 bis 19, dadurch gekennzeichnet, daß im ASIC (9) sämtliche zu berücksichtigenden Teilechos nachgebildet und von dem an die TK-Einrichtung übertragenen Nutzsignal einzeln abgezogen werden.
